Europäisches Patentamt

European Patent Office

Office européen des brevets

(11) Publication number: **0 400 721**
**A2**

## (12) EUROPEAN PATENT APPLICATION

(21) Application number: **90201302.8**

(22) Date of filing: **22.05.90**

(51) Int. Cl.5: **C08G 67/02**

(30) Priority: **26.05.89 US 347227**

(43) Date of publication of application:
**05.12.90 Bulletin 90/49**

(84) Designated Contracting States:
**BE DE FR GB IT NL**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Kluttz, Robert Quillan**
**15719 Sweetwater Creek**
**Houston, Texas 77095(US)**

(74) Representative: **Aalbers, Onno et al**
**P.O. Box 302**
**NL-2501 CH The Hague(NL)**

(54) Processing of polymers of carbon monoxide and ethylenically unsaturated compounds.

(57) Process for processing a linear alternating polymer of carbon monoxide and at least one ethylenically unsaturated compound involving at least one melting and solidification cycle, wherein at least one melting of the polymer is conducted in intimate contact with a blanketing atmosphere containing carbon dioxide.

EP 0 400 721 A2

# PROCESSING OF POLYMERS OF CARBON MONOXIDE AND ETHYLENICALLY UNSATURATED COMPOUNDS

This invention relates to processing of linear alternating polymers of carbon monoxide and at least one ethylenically unsaturated compound.

These polymers have been known for some time as polyketones or polyketone polymers.

More recently, they have become of greater interest in part because of a greater availability as illustrated by a number of European Patent Applications, such as EP-A-121.965, 181.014, 224.454 and 257.663.

The polymers are relatively high molecular weight materials having utility as premium thermoplastics. They may be employed in the production of shaped articles, for example, as containers for food and drink, by conventional melt processing methods for thermoplastics such as extrusion, injection moulding or thermoforming. Such a method for processing a linear alternating polymer of carbon monoxide and at least one ethylenically unsaturated compound involving at least one melting and solidification cycle is known from EP-A-306.115.

Research in the Applicant's laboratory has shown that although the polyketone polymers process relatively easily, they may undergo a certain degree of loss of desirable properties when such processing includes one or even more than one cycle of melting and solidification. It would therefore be of advantage to provide a method by which an improved melt stability is attained during the melt solidification processing of the polyketone polymers, so that the loss of desirable properties is minimized.

It has now been found that an important improvement in melt stability can be imparted to the polyketone polymers by providing an intimate contact of the polymer melt with carbon dioxide during at least one cycle of melting and solidification (crystallization) undergone by the polyketone polymer. The improvement in melt stability is manifested by, for example, a reduced rate of viscosity increase observed during rheometric evaluation in which the polymer is heated above its melting point and subjected to shear.

The effect of carbon dioxide in providing melt stability to the polyketone polymer is surprising because it does not appear to be acting as a lubricant since feed rates during extrusion and initial viscosity measurements are not affected. Secondly, one could think that the carbon dioxide acts as a buffer to inhibit acid and base catalyzed crosslinking reactions in the polyketone. However, although the buffering capability of carbon dioxide, bicarbonate salts, and carbonate salts in aqueous solution is broadly well known, it is unlikely that the observed effect can be explained by the unknown ability of very small amounts of carbon dioxide to buffer a polymer melt at elevated temperatures in the presence of only traces of water. An even more unexpected benefit is the longevity of the stabilizing effect. Carbon dioxide is a volatile gas and would be expected to rapidly diffuse out of the polyketone. Nevertheless, polyketones extruded under an atmosphere of carbon dioxide exhibit improved melt stability in subsequent melt processing steps even when these melt processing steps are conducted at a much later time. Polyketones are subject to high temperature oxidation, and some benefit is expected from simply excluding oxygen during a melt processing step. Indeed, an improvement is observed when a melt processing step is performed under a nitrogen blanket. The presence of carbon dioxide, however, imparts an additional improvement in melt stability beyond that observed with a nitrogen blanket so that the stabilizing effect of carbon dioxide cannot totally be attributed to simple exclusion of oxygen.

The present invention, therefore, provides a process for processing a linear alternating polymer of carbon monoxide and at least one ethylenically unsaturated compound involving at least one melting and solidificacion cycle, characterized in that at least one melting of the polymer is conducted in intimate contact with a blanketing atmosphere containing carbon dioxide.

The polymers to which improved melt stability is provided according to the invention are linear alternating polymers of carbon monoxide and at least one ethylenically unsaturated compound. Suitably, these compounds are ethylenically unsaturated hydrocarbons. Among these, the hydrocarbons which are more suitable as precursors of the linear alternating polymers have up to 20 carbon atoms inclusive, preferably up to 10 carbon atoms, and are aliphatic such as ethylene and other α-olefins including propylene, 1-butene, isobutylene, 1-hexene, 1-octene and 1-dodecene, or are arylaliphatic having an aryl substituent or an otherwise aliphatic molecule, particularly an aryl substituent on a carbon atom of the ethylenic unsaturation. Illustrative of this latter class of ethylenically unsaturated hydrocarbons are styrene, p-methylstyrene, p-ethylstyrene and m-isopropylstyrene. Preferred polymers are copolymers of carbon monoxide and ethylene or terpolymers of carbon monoxide, ethylene and a second hydrocarbon of at least 3 carbon atoms, particularly an α-olefin such as propylene.

Good results can be obtained by subjecting the polymers to at least one melting according to the invention. In a preferred embodiment of the invention at least one melting and solidification of the polymer is conducted in intimate contact with a blanketing atmosphere containing carbon dioxide.

When the preferred terpolymers of carbon monoxide, ethylene and a second hydrocarbon are to be employed in melt processing according to the invention, there will be at least 2 units incorporating a moiety of ethylene for each unit incorporating a moiety of the second hydrocarbon. Preferably there will be from 10 to 100 units incorporating a moiety of ethylene for each unit incorporating a moiety of the second hydrocarbon. The polymer chain of the preferred polymers is therefore represented by the formula

$$\{CO\{CH_2\text{-}CH_2\}\}_x\{CO\{G\}\}_y \quad (I)$$

wherein G is the moiety of the second hydrocarbon polymerized through the ethylenic unsaturation. The -CO{CH_2-CH_2} units and the {G}units are formed randomly throughout the polymer chain and the ratio of y:x is no more than 0.5. In the modification where copolymers of carbon monoxide and ethylene without the presence of the second hydrocarbon are processed according to the invention, the copolymer is represented by the above formula I wherein y is 0. When y is other than 0, i.e., terpolymers are processed, the preferred ratio of y:x is from 0.01 to 0.1. The end groups or "caps" of the polymer chain will depend upon what materials are present during the polymerization. The end groups are of little = significance so far as the overall properties of the polymers are concerned so that the polymer is fairly represented by the polymer chain as depicted above.

Of particular interest are the polymers of the above formula having a molecular weight of from 1000 to 200,000, especially those of number average molecular weight of from 20,000 to 90,000 as determined by gel permeation chromatography. The physical properties of the polymer will depend in part on the molecular weight, whether the polymer is a copolymer or a terpolymer and, in the case of terpolymers, the nature of and the proportion of the second hydrocarbon present. Typical melting points for such polymers are from 175 $^\circ$C to 300 $^\circ$C, but more often are from 210 $^\circ$C to 270 $^\circ$C. The polymers will have a limiting viscosity number (LVN), measured in m-cresol at 60 $^\circ$C, of from 0.4 dl/g to 10 dl/g, but preferred are those having an LVN of from 0.8 dl/g to 4 dl/g.

The polyketone polymers may be produced by the general methods of the above mentioned European Patent Applications. Although the scope of the polymerization is extensive, a preferred polymerization catalyst composition is formed from a palladium salt, particularly a palladium alkanoate such as palladium acetate, an anion of trifluoroacetic acid or p-toluenesulphonic acid and a bidentate ligand of phosphorus such as 1,3-bis(diphenylphosphino)-propane or 1,3-bis[di(2-methoxyphenyl)phosphino]propane. Lower alkanols such as methanol, ethanol and propanol are satisfactory as a reaction diluent, methanol is preferred. Typical polymerization conditions include a polymerization temperature of from 35 $^\circ$C to 150 $^\circ$C and a pressure of from 10 bar to 200 bar. The polyketone polymer is generally obtained as a suspension in the reaction diluent and is recovered by conventional methods such as filtration or decantation. The polyketone polymer is employed as such or is purified, if desired, by contact with a solvent which is selective for the catalyst residues.

The precise method of contacting the polyketone polymer and the carbon dioxide is not material so long as the polymer is maintained in a carbon dioxide containing environment during at least one melt processing step. The quantity of carbon dioxide in the environment may be varied from 0.1% to 100% by volume of the blanketing atmosphere. Additional carbon dioxide may be introduced into the polymer by operating in an atmosphere of carbon dioxide at elevated pressure, but the benefit is realized by operating at standard pressure. In one modification, the polymer is blanketed with carbon dioxide as by operating an extruder through which the polymer is processed in a gaseous carbon dioxide atmosphere. In an alternate modification, carbon dioxide is provided in a solid form, i.e., dry ice, which, in a finely divided form, is mixed with the polymer prior to or during the processing. The vaporization of the dry ice during heating will provide the necessary carbon dioxide environment and the resulting improvement in melt stability. The contacting with carbon dioxide in the first melting/solidification cycle is useful to impart the initial melt stability which persists after the initial cycle has been completed. It may be useful to provide a carbon dioxide environment in subsequent melting and solidification cycles in order to better maintain the melt stability initially provided. It is also possible to provide the carbon dioxide environment in a second melting/solidification cycle for a given polyketone polymer when the carbon dioxide was not present in the initial cycle. In such an embodiment the provision of carbon dioxide will not, of course, provide melt stability to the first melting and solidification but would retard further loss of melt stability in subsequent cycles. In terms of the invention as described above, the initial cycle would be considered to be the first cycle at which the carbon dioxide is provided, with the provision of the carbon dioxide serving to result in improved melt stability as compared to the properties of the polymer when the carbon dioxide is first provided.

The particular quantity of carbon dioxide to be employed is not critical although preferably sufficient carbon dioxide is provided to ensure that the polyketone polymer is intimately contacted with carbon

3

dioxide while molten during the melting/solidification cycle. This intimate contact may be achieved by use of a blanketing atmosphere containing from 0.1% to 100% by volume carbon dioxide, but preferably the blanketing atmosphere is from 5% to 100% by volume carbon dioxide. Alternatively, dry ice may be added to the polyketone polymer prior to or during melt processing to achieve the same environment. Any excess of carbon dioxide is not detrimental because it will diffuse away from or out of the polymer subsequent to the completion of the melting/solidification. It is in part because of this latter feature that the use of carbon dioxide is so advantageous. Use of carbon dioxide does not add additional materials to the polymer which could cause a decrease in the desirable properties of the polyketone polymer or difficulties in obtaining governmental approval for food packaging applications.

The polyketone polymer to which melt stability has been imparted shows particular advantages when the polymer is processed by multiple melting and solidification cycles to produce a shaped article which is likely to be exposed to elevated temperature, such as, for example, a container for food or drink. By way of a specific example, a polyketone polymer is often compounded with stabilizers, colorants, reinforcements and other additives by passage through an extruder to form a polymer composition as extrudate in the physical form of nibs. The nibs are subsequently used in an injection moulding apparatus to produce a shaped article. Use of the process of the invention during the extrusion imparts melt stability not only to the nibs but also to the shaped article. While the process of the invention provides advantages when the polyketone polymer is processed by methods which do not include melting and solidification, the advantages are most apparent when multiple melting solidification procedures are involved in the processing of the polyketone polymer.

The invention is further illustrated by the following examples.

## EXAMPLES

Linear alternating terpolymers A-F of carbon monoxide, ethylene and propylene were produced employing a catalyst formed from palladium acetate, trifluoroacetic acid and 1,3-bis[di(2-methoxyphenyl)-phosphino]propane. These terpolymers are listed in Table A with their respective melting point and LVN, measured in m-cresol at 60 °C.

Table A

| Polymer | Melting point °C | LVN dl.g |
|---------|------------------|----------|
| A | 223 | 1.79 |
| B | 219 | 1.72 |
| C | 226 | 1.62 |
| D | 223 | 1.81 |
| E | 222 | 1.87 |
| F | 221 | 1.76 |

## EXAMPLE 1

Samples of terpolymers A, B, and C (Table A) were extruded either in air, under a blanket of carbon dioxide, or with crushed dry ice added during the extrusion. The extruder was a 15 mm twin screw machine operating at 240 °C. The nibs from the extruder were compression moulded into 0.76 mm thick plaques for rheology measurements.

As a measure of the melt stability of the polymer samples, the dynamic viscosity was measured over a 30-minutes period of time. A high rate of viscosity increase is indicative of poor melt stability. A decrease in the rate of viscosity increase constitutes an improvement in melt stability. The dynamic viscosity was measured at 275 °C on a parallel plate apparatus at a shear rate of 1.0 radian second at 25% strain. The results are shown in the Tables B-D.

4

## TABLE B

| Polymer A | Rate of viscosity increase |
|---|---|
| Processing condition | (Pa.s/min) |
| $CO_2$ blanket | 1250 |
| dry ice added | 1050 |
| air (comparative experiment) | 1300 |

## TABLE C

| Polymer B | Rate of viscosity increase |
|---|---|
| Processing condition | (Pa.s/min) |
| dry ice added | 1600 |
| air (comparative experiment) | 3000 |

## TABLE D

| Polymer C | Rate of viscosity increase |
|---|---|
| Processing condition | (Pa.s/min) |
| $CO_2$ blanket | 2100 |
| dry ice added | 1400 |
| air (comparative experiment) | 2700 |

## EXAMPLE 2

Samples of terpolymers D, E, and F (Table A) were compression moulded into 0.76 mm thick plaques. These plaques were measured for melt stability as described in Example 1. In one set of experiments, the rheology test was blanketed with nitrogen while in the second set of experiments the rheology test was blanketed with carbon dioxide. The results are shown in the Tables E-G.

## TABLE E

| Polymer D | Rate of viscosity increase |
|---|---|
| Rheology test condition | (Pa.s/min) |
| CO₂ blanket<br>N₂ blanket (comparative experiment) | 214<br>352 |

## TABLE F

| Polymer E | Rate of viscosity increase |
|---|---|
| Rheology test condition | (Pa.s/min) |
| CO₂ blanket<br>N₂ blanket (comparative experiment) | 258<br>302 |

## TABLE G

| Polymer F | Rate of viscosity increase |
|---|---|
| Rheology test condition | (Pa.s/min) |
| CO₂ blanket<br>N₂ blanket (comparative experiment) | 196<br>271 |

Examples 1 and 2, in so far a blanket of carbon dioxide or crushed dry ice were applied, are according to the invention. Experiments which were carried out in an air or nitrogen atmosphere, have been added for comparison.

Examples 1 and 2 clearly show that maintaining a carbon dioxide containing atmosphere in intimate contact with the polymer melt, either in an extruder, or in a melt viscosity measuring device, has a beneficial influence on the melt stability of the polymers investigated. It is emphasized that in Example 1 extrusion was carried out in a carbon dioxide containing atmosphere, while subsequent compression moulding and melt rheology measurements were carried out without (deliberate) application of carbon dioxide. Therefore, it is concluded that the polymers extruded in a carbon dioxide atmosphere exhibit improved melt stability in subsequent melt processing steps. Example 2 also shows that the beneficial influence of carbon dioxide is beyond that of nitrogen.

## Claims

1. Process for processing a linear alternating polymer of carbon monoxide and at least one ethylenically unsaturated compound involving at least one melting and solidification cycle, characterized in that at least one melting of the polymer is conducted in intimate contact with a blanketing atmosphere containing carbon dioxide.

2. A process as claimed in claim 1, characterized in that at least one melting and solidification of the

6

polymer is conducted in intimate contact with a blanketing atmosphere containing carbon dioxide.

3. A process as claimed in claim 1 or 2, characterized in that the polymer is represented by the formula

$$\{CO\{CH_2\text{-}CH_2\}\}_x\ \{CO\{G\}\}_y$$

wherein G is a moiety of an ethylenically unsaturated hydrocarbon of at least 3 carbon atoms polymerized through the ethylenic unsaturation and the ratio of y:x is no more than 0.5.

4. A process as claimed in claim 3, characterized in that y is 0.

5. A process as claimed in claim 3, characterized in that G is a moiety of propylene.

6. A process as claimed in claim 5, characterized in that the ratio of y:x is from 0.01 to 0.1.

7. A process as claimed in any of claims 1-6, characterized in that the amount of carbon dioxide in the blanketing atmosphere is from 0.1 to 100% by volume.

8. A process as claimed in claim 7, characterized in that the amount of carbon dioxide is from 5 to 100% by volume.